# EUROPÄISCHE PATENTSCHRIFT

(11) **EP 1 824 902 B1**
(45) Veröffentlichungstag und Bekanntmachung des Hinweises auf die Patenterteilung: **04.06.2008**
(21) Anmeldenummer: 05820684.8
(22) Anmeldetag: 21.11.2005
(51) Int. Cl.: C08G 69/02, B32B 27/34, C08J 5/18, E04B 1/62

(54) **DAMPFBREMSFOLIE**
VAPOR BARRIER FILM
FILM PARE-VAPEUR

(30) Priorität: 14.12.2004 DE 202004019654 U
(43) Veröffentlichungstag der Anmeldung: 29.08.2007
(73) Patentinhaber: Orbita-Film GmbH, 06369 Weissandt-Gölzau (DE)
(72) Erfinder: BAUMANN, Hans, Joachim, 06366 Köthen (DE); SCHRÖTER, Irene, 06369 Dohndorf (DE); KRÜGER, Norbert, 06193 Nauendorf (DE)
(74) Vertreter: Wablat, Wolfgang
(86) Internationale Anmeldenummer: PCT/DE2005/002128
(87) Internationale Veröffentlichungsnummer: WO 2006/063549

(56) Entgegenhaltungen:
- EP-A- 0 701 898
- WO-A-00/37751
- DE-A1- 10 231 769
- DE-C1- 19 514 420

## Beschreibung

Die Erfindung betrifft eine Dampfbremsfolie auf Polyamidbasis, die einen von der Umgebungsfeuchte abhängigen Wasserdampf-Diffusionswiderstand aufweist, als Bestandteil des Wärmedämmsystems von Gebäuden.

Beim Bau neuer Gebäude und der Altbausanierung werden Wärmedämm-Maßnahmen durchgeführt, mit denen eine Absenkung des Kohlenstoffdioxidausstoßes beim Beheizen der Gebäude erreicht werden soll. Dabei ist die Erfüllung der DIN 4108-7 zu gewährleisten, die bei jedem Gebäude die Winddichtheit quer durch die Dämmung vorschreibt. Der Aufbau der installierten Wärmedämmung (Wärmedämmsystem) besteht im Allgemeinen aus den folgenden Bestandteilen in der Reihenfolge von außen nach innen:
Ziegel, diffusionsoffene Unterspannbahn, Wärmedämmschicht (z.B. Mineralwolle), Dampfbremse, Verkleidung.

Damit wird zum einen das Eindringen von kalter Außenluft in den Gebäudeinnenraum und zum anderen das Entweichen warmer Raumluft aus dem Gebäude verhindert. Die Ursache für die möglichen Luftbewegungen können Risse, Fugen und Spalte im Bereich der angebrachten Dämmung sein. Die Folgen solcher Luftbewegungen sind die sehr hohen Wärmeenergieverluste und die bauwerkschädigende Tauwasserbildung. Die Verwendung einer diffusionsoffenen Innenverkleidung beim Bau und in der Sanierung von Gebäuden erfordert eine zusätzliche Dampfbremse.

Die Materialien für eine Dampfbremsfolie werden durch ihren Wasserdampf-Diffusionswiderstand charakterisiert. Dieser Wasserdampfdiffusionswiderstand wird üblicherweise als s_{d}-Wert bezeichnet. Der s_{d}-Wert ist der Wert einer äquivalenten Luftschichtdicke, welche die gleichen Eigenschaften bezüglich der wasserdampfdiffusion aufweisen würde wie das verwendete Material. Aus der Fachliteratur ist bekannt, dass man bei s_{d}-Werten < 0,5 m von diffusionsoffenen Schichten sprechen kann. Diffusionshemmende Schichten sind Schichten, bei denen der s_{d}-Wert zwischen 0,5 und 1500 m liegt.

Es ist allgemein bekannt, dass eine Polyethylenfolie eine sehr geringe Wasserdampfdurchlässigkeit (im folgenden mit WDD bezeichnet) besitzt. Sie beträgt z.B. 4,3 g/(m²d) für eine LDPE-Folie mit einer Dicke von 100 µm (Messtemperatur 39,5°C). Für Polyethylenfolien gilt, dass zum Beispiel der Wert des Wasserdampf-Diffusionswiderstandes von s_{d} ≥ 100 m für unterschiedliche Luftfeuchtigkeiten und Umgebungstemperaturen nahezu konstant ist. Diese Dampfbremse ist dann aufgrund des hohen s_{d}-Wertes als diffusionsdicht einzuordnen. Aus diesem Grund kann dann zwar keine Feuchte aus den Wohnräumen in die Konstruktion kommen, es gelangt aber auch keine Feuchte (z.B. aus dem Holz der Dachstuhlkonstruktion oder aus dem verarbeiteten Dämmstoff) zur Wohnraumseite hin. Dies kann in ungünstigen Fällen zu Nässeschäden an der Dachkonstruktion führen.

Polyethylenfolien weisen jedoch eine Reihe von günstigen Eigenschaften auf. Es sind preisgünstige Produkte, die über einen weiten Temperaturbereich gute Weiterverarbeitungseigenschaften aufweisen. Deshalb wurde versucht, die WDD zu verbessern.

Beim Einsatz von Polyethylen kann die Verbesserung der WDD durch die einzelne und/oder gemeinsame Nutzung unterschiedlicher Modifikationsvarianten erreicht werden. Die Steigerung der Porösität durch den Zusatz blasenbildender oder quellender Zusätze stellt eine mögliche Modifizierungsvariante dar (JP 63286331, JP 62282003).Eine zweite Variante zur positiven Beeinflussung der WDD von Polyethylenfolien ist die Erhöhung der Hydrophilie durch Tensidzusatz (EP 192965), Zusatz hydrophiler Füllstoffe (JP 62081427) oder Zusatz hydrophiler Polymere (JP 11302433). Eine dritte Variante zur Verbesserung der WDD ist die Mikroperforation der Polyethylenfolie. Mit ihrer von den Umgebungsbedingungen unabhängigen WDD (ca. s_{d} = 2,5 - 3m) kann es unter sommerlichen Verhältnissen im Extremfall zu Schäden an der Dachkonstruktion kommen, deren Ursache eine zu hohe Restfeuchte im Dachbereich ist. Der durch die Mikroperforation erlittene Festigkeitsabfall wird durch die Verstärkung der Folie mit einem Gitternetzmaterial ausgeglichen. Daraus ergibt sich aber ein hohes Flächengewicht (150 - 200 g/m²), was die Verarbeitungseigenschaften beim Verlegen auf der Baustelle ungünstig beeinflusst.

Für Natronkraftpapier ist bekannt, dass sich die Wasserdampfdurchlässigkeit des Papiers bei einer hohen Feuchtebelastung irreversibel ändert und das Auftreten von Schimmelpilzkulturen beobachtet werden konnte.

Auf der Basis von Zellulose hergestellte Folien mit einem saisonabhängigen, variablen s_{d}-Wert (Sommer: s_{d}=3,5, Winter s_{d}=0,8) weisen ungenügende mechanische Eigenschaften für die Verwendung als Dampfbremse auf. Beispielsweise haben solche Folien eine sehr niedrige Bruchdehnung von nur ca. 2-3%.

Ferner ist die Verwendung von Folien mit von der relativen Umgebungsfeuchte abhängigen Wasserdampfdurchlässigkeiten (WDD) bekannt. Bei den eingesetzten Materialien handelt es sich z.B. um Natronkraftpapier, Cellulosefolien, Homo- und Copolyamidfolien. In der DE 195 14 420 C1 wird beispielsweise eine Homopolyamidfolie mit einer Dicke von 50 µm beschrieben, die folgende Werte aufweist: bei einer relativen Feuchte der die Dampfbremse umgebenden Atmosphäre im Bereich von 30-50% liegt der s_{d}-Wert zwischen 2 und 5 m, und bei einer relativen Feuchte im Bereich von 60-80% wird ein s_{d}-Wert < 1 m erreicht. Diese Folien weisen allerdings den Nachteil auf, dass sowohl ein s_{d}-Wert von < 1 m bei relativ hohen Luftfeuchtigkeiten wie auch ein s_{d}-Wert zwischen 2 und 5 m bei Luftfeuchtigkeiten zwischen 30 und 50% nicht ausreichend ist, da insbesondere bei feuchtem Raumklima immer noch zuviel Feuchtigkeit in die Dachkonstruktion eindringen kann.

Ähnliche Wasserdampfdurchlässigkeiten sind in der DE 102 31 769 beschrieben, wobei jedoch durch den Einsatz von Copolyamiden bzw. Copolyamiden und Zähmodifikatoren bessere mechanische Eigenschaften erzielt werden.

WO-A-00/37751 beschreibt eine Wasserdampfsperre mit zwei wasserumdurchlässigen Membranen. Wenigstens ein Teil der zweiten Membran kann aus Polyamid bestehen.

Aufgabe der Erfindung ist es daher, eine Dampfbremse der eingangs erwähnten Art auszubilden, die verbesserte Eigenschaften zur Verhinderung von Beschädigungen der verwendeten Baumaterialien durch Feuchtigkeit aufweist.

Erfindungsgemäß wird die Aufgabe mit einer Folie gemäß den Merkmalen des Schutzanspruchs 1 gelöst. Vorteilhafte Ausgestaltungen und Weiterbildungen der Erfindung ergeben sich aus den Unteransprüchen.

Der Grundgedanke der Erfindung besteht darin, eine verbesserte Dampfbremsfolie als Teil eines Wärmedämmsystems mit einem von der Umgebungsfeuchte abhängigen Wasserdampf-Diffusionswiderstand auszubilden. Die Lösung der Aufgabe besteht in einer Dampfbremsfolie auf Polyamidbasis, die bei einer relativen Umgebungsfeuchte von 30 bis 50 % einen Wasserdampf-Diffusionswiderstand s_{d} von > 5 m diffusionsäquivalente Luftschichtdicke und bei einer relativen Umgebungsfeuchte von 60 bis 80 % einen Wasserdampf-Diffusionswiderstand s_{d} von < 0,5 m diffusionsäquivalente Luftschichtdicke aufweist.

Das Material der Dampfbremsfolie ist eine orientierte Homopolyamid- oder Copolyamidfolie. Bevorzugte Copolyamide sind PA612 oder PA46, bevorzugte Homopolyamide sind PA6, PA66, PA12 oder PA4.

Das Material der Dampfbremsfolie weist eine Dicke im Bereich von 50 bis 150 µm auf, vorzugsweise im Bereich von 65 bis 85 µm und höchst bevorzugt bei einer Dicke von 75 µm.

Um einen Wasserdampf-Diffusionswiderstand, im folgenden mit s_{d}-Wert bezeichnet, von > 5m bei einer relativen Umgebungsfeuchte von 30 bis 50 % zu erreichen, wird üblicherweise die Dicke der Folie vergrößert. Diese Vergrößerung führt zu einer Zunahme der Sperrwirkung gegenüber Wasserdampf. Bei einer solchen Vergrößerung der Dicke erhöht sich aber typischerweise auch der s_{d}-Wert der Folie bei einer relativen Umgebungsfeuchte von 60 bis 80%. Eine Vergrößerung der Dicke führt daher für bekannte Folien bei einer relativen Umgebungsfeuchte im Bereich von 60 bis 80% zu einem s_{d}-Wert, der deutlich höher als s_{d} = 0, 5 m liegt.

In einem bevorzugten Ausführungsbeispiel wurde eine im Herstellungsprozess orientierte Polyamidfolie verwendet. Zahlreiche Messungen und Versuche haben gezeigt, dass eine solche Folie im Bereich der relativen Umgebungsfeuchte von 30 bis 50% die zu erwartende Dickenabhängigkeit der Wasserdampfdurchlässigkeit aufweist. Durch Variation der Dicke kann bei einer solchen Folie somit der gewünschte s_{d}-Wert bei einer relativen Umgebungsfeuchte von 30 bis 50% erreicht werden. Beispielsweise wurde bei einer Folie der Dicke 75 µm ein s_{d}-Wert von 5,8 m gemessen.

Ein überraschendes Ergebnis dieser Messungen und Versuche ist, dass ein solcher Anstieg des s_{d}-Wertes mit zunehmender Dicke für den Bereich der relativen Umgebungsfeuchte von 60 bis 80 % jedoch nicht auftritt. Die Messungen und Versuche haben gezeigt, dass bei einer relativen Umgebungsfeuchte im Bereich von 60 bis 80 % der s_{d}-Wert einer solchen Folie sich nur geringfügig ändert und unter 0,5 m bleibt. Im bevorzugten Ausführungsbeispiel wurde für die Folie der Dicke 75 µm ein s_{d}-Wert von 0,42 m ermittelt.

In Tabelle 1 sind die s_{d}-Werte für verschiedene Dicken der Polyamidfolien aufgeführt. Die Prüfung der Wasserdampfdurchlässigkeit und die Messung der s_{d}-Werte erfolgt nach den Richtlinien der DIN ISO EN 12572.

**Tabelle 1**

| Foliendicke | s_{d}-Wert bei 30-50% relativer Umgebungsfeuchte | s_{d}-Wert bei 60-80% relativer Umgebungsfeuchte |
|---|---|---|
| 50 µm | 4,0 m | 0,36 m |
| 70 µm | 5,2 m | 0,39 m |
| 75 µm | 5,8 m | 0,42 m |
| 90 µm | 8,5 m | 0,56 m |

Die Verwendung einer solchen Folie als Dampfbremse liefert gegenüber dem Stand der Technik ein deutlich verbessertes Verhalten bezüglich des von der Umgebungsfeuchte abhängenden Wasserdampf-Diffusionswiderstandes. Ein s_{d}-Wert > 5 m bei einer relativen Umgebungsfeuchte von 30 bis 50 % gewährleistet eine bessere diffusionshemmende Wirkung, und ein s_{d}-Wert < 0,5 m bei relativen Umgebungsfeuchten von 60 bis 80 % erfüllt die Anforderungen des Fachmannes. Mit der erfindungsgemäßen Folie werden somit die Eigenschaften der Dampfbremse verbessert und das Risiko von Beschädigungen der verwendeten Baumaterialien, beispielsweise durch Tauwasserbildung, deutlich verringert.

## Patentansprüche

1. Dampfbremsfolie auf Polyamidbasis als Teil eines Wärmedämmsystems mit einem von der Umgebungsfeuchte abhängigen Wasserdampf-Diffusionswiderstand, **dadurch gekennzeichnet, dass**
das Polyamid bei einer relativen Umgebungsfeuchte von 30 bis 50% einen Wasserdampf-Diffusionswiderstand sd von > 5 m diffusionsäquivalente Luftschichtdicke und bei einer relativen Umgebungsfeuchte von 60 bis 80 % einen Wasserdampf-Diffusionswiderstand sd von < 0,5 m diffusionsäquivalente Luftschichtdicke aufweist und, dass
das Material der Dampfbremsfolie eine orientierte Homopolyamid- oder Copolyamidfolie ist.

2. Dampfbremsfolie nach Anspruch 1, **dadurch gekennzeichnet, dass** das Copolyamid eines der Materialien PA612 oder PA46 ist.

3. Dampfbremsfolie nach Anspruch 1, **dadurch gekennzeichnet, dass** das Homopolyamid eines der Materialien PA6, PA66, PA12 oder PA4 ist.

4. Dampfbremsfolie nach einem der Ansprüche 1 bis 3, **dadurch gekennzeichnet, dass** das Material der Dampfbremsfolie eine Dicke im Bereich von 50 bis 150 µm aufweist.

5. Dampfbremsfolie nach Anspruch 4, **dadurch gekennzeichnet, dass** das Material der Dampfbremsfolie eine Dicke von 65 bis 85 µm aufweist.

6. Dampfbremsfolie nach Anspruch 5, **dadurch gekennzeichnet, dass** das Material der Dampfbremsfolie eine Dicke von 75 µm aufweist.

## Claims

1. Vapour barrier film based on polyamide as part of a thermal insulation system with a resistance to water vapour diffusion dependent on the ambient humidity
**characterised in that**
the polyamide exhibits, at a relative ambient humidity of 30 to 50%, a resistance to water vapour diffusion s_{d} of > 5 m of diffusion equivalent air layer thickness and with a relative ambient humidity of 60 to 80% a resistance to water vapour diffusion s_{d} of < 0.5 m of diffusion equivalent air layer thickness and that the material of the vapour barrier film is an oriented homopolyamide or copolyamide film.

2. Water vapour barrier film according to claim 1 **characterised in that** the copolyamide is one of the materials PA612 or PA46.

3. Water vapour barrier film according to claim 1 **characterised in that** the homopolyamide is one of the materials PA6, PA66, PA12 or PA4.

4. Water vapour barrier film according to one of claims 1 to 3 **characterised in that** the material of the water vapour barrier film has a thickness in the region of 50 to 150 µm.

5. Water vapour barrier film according to claim 4 **characterised in that** the material of the water vapour barrier film has a thickness of 65 to 85 µm.

6. Water vapour barrier film according to claim 5 **characterised in that** the material of the water vapour barrier film has a thickness of 75 µm.

## Revendications

1. Film pare-vapeur à base de polyamide faisant partie d'un système d'isolation thermique dont la perméance à la vapeur d'eau dépend de l'hygrométrie environnante,
**caractérisé en ce que**
le polyamide présente une perméance à la vapeur d'eau correspondant à une valeur sd > 5 m d'épaisseur de couche d'air de diffusion équivalente lorsque l'hygrométrie environnante est comprise entre 30 et 50 % alors qu'il présente une perméance à la vapeur d'eau correspondant à une valeur sd < 0,5 m d'épaisseur de couche d'air de diffusion équivalente lorsque l'hygrométrie environnante est comprise entre 60 et 80 % et que le matériau du film pare-vapeur est un film en homopolyamide ou copolyamide orientés.

2. Film pare-vapeur selon la revendication 1, **caractérisé en ce que** le copolyamide est l'un des matériaux PA612 ou PA46.

3. Film pare-vapeur selon la revendication 1, **caractérisé en ce que** l'homopolyamide est l'un des matériaux PA6, PA66, PA12 ou PA4.

4. Film pare-vapeur selon l'une des revendications 1 à 3, **caractérisé en ce que** l'épaisseur du matériau dudit film pare-vapeur est comprise entre 50 et 150 µm.

5. Film pare-vapeur selon la revendication 4, **caractérisé en ce que** l'épaisseur du matériau dudit film pare-vapeur est comprise entre 65 et 85 µm.

6. Film pare-vapeur selon la revendication 5, **caractérisé en ce que** l'épaisseur du matériau dudit film pare-vapeur est de 75 µm.
